# EUROPÄISCHE PATENTSCHRIFT

(11) **EP 1 213 876 B1**
(45) Veröffentlichungstag und Bekanntmachung des Hinweises auf die Patenterteilung: **25.07.2007**
(21) Anmeldenummer: 00126787.1
(22) Anmeldetag: 06.12.2000
(51) Int. Cl.: H04L 12/26, H04L 12/44, H04L 29/06

(54) **Schaltungsanordnung zum Testen eines Kommunikationssystems**
Circuit arrangement for testing a communication-system
Circuit pour tester un systéme de communication

(43) Veröffentlichungstag der Anmeldung: 12.06.2002
(73) Patentinhaber: Tektronix Berlin GmbH & Co. KG, 13629 Berlin (DE)
(72) Erfinder: Grieswald, Jens, 12105 Berlin (DE)
(74) Vertreter: Schurack, Eduard F.

(56) Entgegenhaltungen:
- EP-A- 0 788 267
- WO-A-97/35406
- DE-A- 3 810 576
- US-A- 5 027 343
- US-A- 5 878 030

## Beschreibung

Die vorliegende Erfindung betrifft das Gebiet des Testens von offenen Kommunikationssystemen. Sie betrifft insbesondere eine Schaltungsanordnung für die Aufbereitung einer Kommunikation, d.h. eine Schaltungsanordnung, mit der eine Kommunikation, die in funktionale Schichten gegliedert ist, von einer ersten Schicht für eine höhere Schicht aufbereitbar und/oder von einer höheren Schicht für die erste Schicht aufbereitbar ist, wobei die erste Schicht von einer physikalischen Schicht gebildet ist.

Unter offenen Kommunikationssystemen sind Systeme zu verstehen, die die Fähigkeit aufweisen, mit anderen Systemen zu kommunizieren und zu kooperieren. Kooperieren bedeutet dabei die Kommunikation zwischen Systemen zu dem Zweck, eine gemeinsame Aufgabe zu erledigen bzw. ein gemeinsames Anfangsverständnis durch Übertragung von Information fortzuschreiben.

Herstellerunabhängige, freizügige Kommunikation wird dadurch erreicht, daß offene Systeme standardisierte Prozeduren für den Informationsaustausch einhalten, beispielsweise genormte Regeln und Protokolle, die das Systemverhalten bestimmen. Derartige Protokolle legen nicht die interne Struktur des offenen Systems fest, sondern sein äußeres Verhalten.

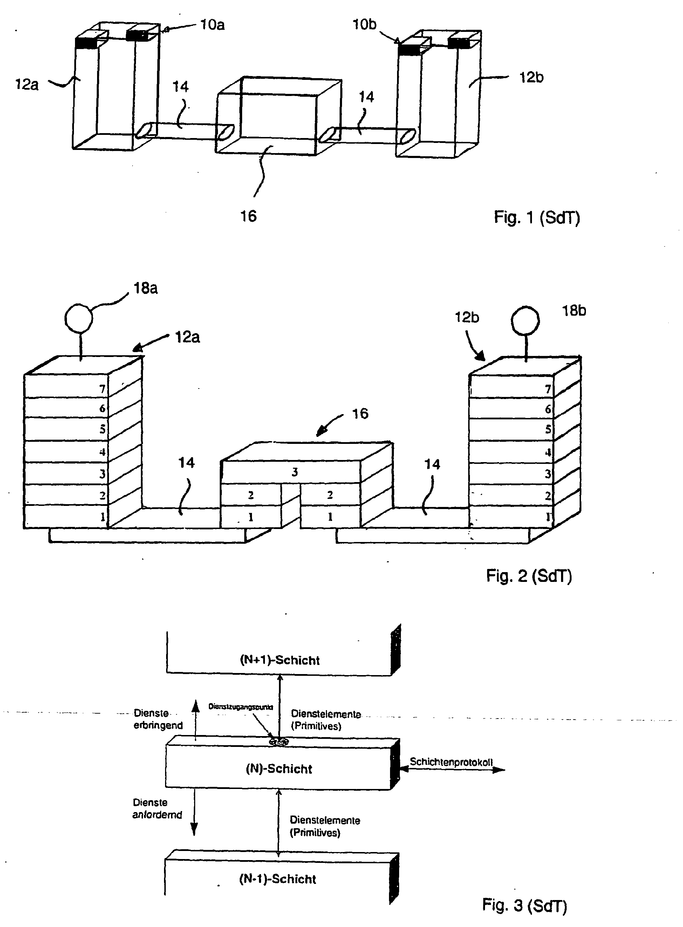

Das Architekturmodell für offene Kommunikationssysteme wurde von dem Internationalen Standardisierungsgremium, der ISO (International Standardization Organization) entwickelt. Das OSI-Referenzmodell (Open Systems Interconnection) gliedert die notwendigen Funktionen in eine hierarchische Schichtenstruktur. Es hat auf die künftige Gestaltung von Datenendsystemen und Datennetzen großen Einfluß. In Fig. 1 ist das OSI-Kommunikationsmodell dargestellt. Anwendungen 10a, 10b zweier Endsysteme 12a, 12b sind die eigentlichen Quellen und Senken der Kommunikation. Ein Endsystem 12a, das eine oder mehrere Anwendungen 10a hat, kommuniziert mit einem anderen Endsystem 12b. Die Kommunikation kann entweder direkt über ein Übertragungsmedium 14 oder über ein Transitsystem 16, das beispielsweise ein Datennetz oder ein Fernsprechnetz sein kann, erfolgen.

Das OSI-Referenzmodell geht von folgenden Prinzipien aus:
- Schichtung von Funktionen, die für die Kommunikation notwendig sind
- Dienstleistung der einzelnen Schichten
- Protokolle zur Kommunikation zwischen Schichten gleicher Ebene

Die sieben Schichten des OSI-Referenzmodells sind in Fig. 2 dargestellt. Bei dem OSI-Referenzmodell handelt es sich um ein Gedankenmodell, bei dem die Kommunikation in streng aufgabenbezogene, funktionale Schichten gegliedert wird. Die Schichten 1 bis 4 bilden dabei die sogenannten Transportfunktionen, die Schichten 5 bis 7 beschreiben Anwendungsprotokolle.

In Fig. 2 sind Elemente, die denen von Fig. 1 entsprechen, mit denselben Bezugszeichen bezeichnet. Darüberhinaus ist gezeigt, daß das jeweilige Endsystem einem Benutzer 18a, 18b zugeordnet ist.

Zu den Funktionen der einzelnen Schichten:
- **Schicht 1:**: **Bit-Übertragungsschicht (physical layer):**
Die Bitübertragungsschicht 1 stellt die ungesicherte Übertragung von binären Signalen auf einer Übertragungsstrecke bereit. Sie umfaßt folgende Funktionen: Parallel/Seriell-Wandlung, Anpassung an die physikalischen Eigenschaften des Übertragungsmediums, Synchronisation, Zusammenschalten von Übertragungsabschnitten, Zustandsüberwachung, Aktivierung und Deaktivierung der Übertragungsstrecke.
- **Schicht 2**: **Sicherungsschicht (Data Link- Layer):**
Aus der ungesicherten Übertragung in Schicht 1 wird mit Hilfe der Funktionen der Schicht 2 eine gesicherte Übertragung erreicht. Sie umfaßt folgende Funktionen: Aufbau/Abbau einer Schicht-2-Verbindung, Übertragungssteuerung, Übertragungsfehlerüberwachung, Aufteilung der Daten der Schicht 3 in Blöcke, Blocknumerierung, Generierung und Auswertung von Prüf-Bytes.
- **Schicht 3**: **Vermittlungsschicht (Network-Layer):**
Hier wird festgelegt, wie eine Netzverbindung zwischen den Endsystemen aufgebaut wird. Funktionen: Aufbau und Überwachung von Netzverbindungen, Verbindungslenkung (Wegewahl), netzabhängige Fehlerüberwachung, Endsystem-Kopplung.
- **Schicht 4**: **Transportschicht (Transport-Layer):**
Schicht 4 errichtet, steuert und beendet die von einem Endsystem zum anderen führenden Transportverbindungen. Sie umfaßt folgende Funktionen: Anpassung an unterschiedliche Netzeigenschaften, Ende-zu-Ende-Fehlerkontrolle, Adreßübersetzung (z.B. Name zu Rufnummer), Datensegmentierung.
- **Schicht 5**: **Steuerung der Kommunikation (Session-Layer):**
Die Schicht 5 dient der Eröffnung einer Kommunikation, ihrer geordneten Durchführung und Beendigung. Sie umfaßt die Funktion eines Aufbaus und einer Aufrechterhaltung logischer Verbindungen, Verbindungsidentifikation und Dialogsteuerung.
- **Schicht 6**: **Darstellungsschicht (Presentation-Layer):**
Das Darstellungsprotokoll legt fest, wie die Informationen in einer gemeinsamen Sprache auszutauschen und darzustellen sind. Schicht 6 umfaßt die Funktionen Syntaxwahl entsprechend der Anwendung, Formatanpassung, Code- und Alphabetwandlung.
- **Schicht 7**: **Anwendungsschicht (Application Layer):**
In Schicht 7 werden die System- und Anwendungssteuerungen durchgeführt. Sie umfaßt die Funktionen Identifikation der Kommunikationspartner, Berechtigungsprüfung für Kommunikation, Zugang zu Kommunikation, Wahl von Übermittlungsgüte und Übermittlungsparametern.

Eine Schicht im Referenzmodel wird repräsentiert durch eine sogenannte Instanz (Entity). Die Instanz erbringt die ihr im Schichtenmodell zugewiesenen Funktionen. Für die nächsthöhere Schicht erbringt sie dadurch einen Dienst. Ein Beispiel ist der Dienst der Schicht 2, der für die Schicht 3 deren Informationen gesichert überträgt. Diese Diensterbringung nutzt nicht nur die nächsthöhere, sondern alle darüberliegenden Schichten. Eine höhere Schicht nutzt so die Summe aller ihr unterliegenden Schichten. Die Instanzen der Schichten kommunizieren nur mit den jeweils benachbarten Schichten (nach oben und unten).

Fig. 3 zeigt die Kommunikation zwischen den Schichten beispielhaft für drei beliebige Schichten 20a, 20b, 20c. Um den Dienst einer bestimmten Schicht erbringen zu können, kommuniziert die entsprechende Instanz mit der Instanz der gleichen Schicht im Partnersystem, ihrer Partnerinstanz (Peer Entity). Die Kommunikation mit der Partnerinstanz erfolgt durch den Austausch von Nachrichten. Der vorgeschriebene Austausch dieser Nachrichten wird Protokoll genannt. Jede Schicht hat ein solches Schichtenprotokoll, um den im Referenzmodell ihr zugewiesenen Dienst an die höheren Schichten erbringen zu können. Die höheren Schichten sehen nichts von diesem Protokoll. Ihnen wird nur das Ergebnis der Diensterbringung präsentiert. Beim Durchlauf der Informationen durch die einzelnen Schichten werden so von jeder Schicht Protokolldateneinheiten den eigentlich zu übertragenden Informationen hinzugefügt. Auf der anderen Seite werden beim Durchlauf von unten nach oben jeweils Protokolldateneinheiten abgezogen, bis schließlich die eigentlich zu übertragenden Informationen übrigbleiben. Das Schichtenprotokoll bestimmt das äußere Verhalten eines Systems und ist deshalb im allgemeinen standardisiert.

Jede Instanz fordert von den jeweils unteren Schichten die zugewiesenen Funktionen an. Alle darüberliegenden Schichten im Referenzmodell werden dabei durch einen Dienstzugangspunkt (Service Access Point) der direkt unter ihr liegenden Schicht repräsentiert. Die Kommunikation zwischen den Schichten erfolgt über sogenannte Dienstelemente (Communication Primitives oder einfach Primitives - unteilbare Elementarnachrichten). Die Kommunikation innerhalb eines Systems ist normalerweise nicht standardisiert.

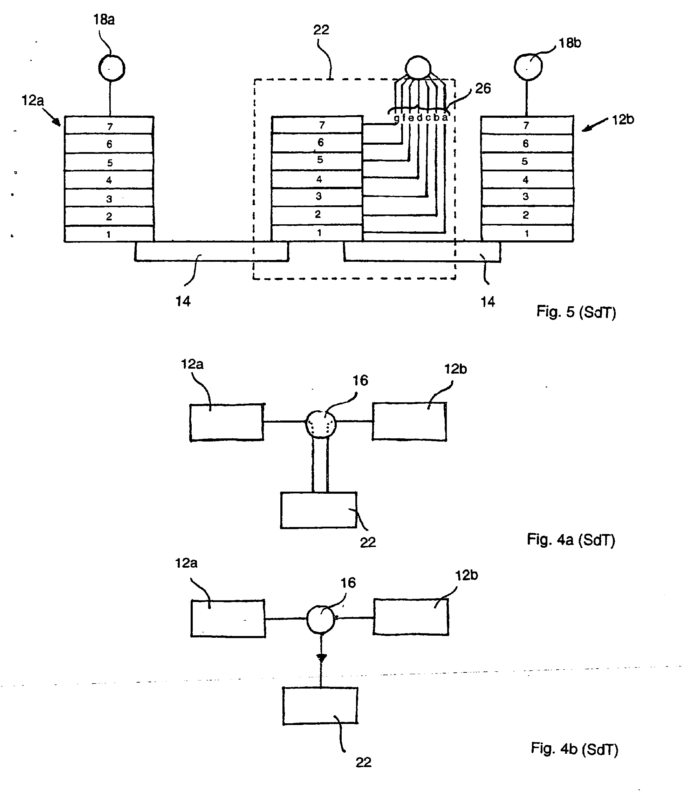

Zur Überprüfung von offenen Kommunikationssystemen werden Testgeräte eingesetzt, beispielsweise Protokolltester. Hierbei haben Protokolltester die Aufgabe, die Servicequalität von Telekommunikationsverbindungen dadurch zu testen, daß sie einerseits real ablaufende Kommunikationen überwachen und diese zur Grundlage einer Analyse machen, zum anderen Teilnehmer an der Kommunikation mit Testkommunikation stimulieren. Im ersten Fall werden zwei Möglichkeiten unterschieden: Zum einen wird die jeweilige über die Kommunikationsleitung übertragene Information dupliziert, siehe Fig. 4b, wobei das Duplikat an den Protokolltester 22 geführt wird. Bei einer zweiten Möglichkeit, siehe Fig. 4a, ist der Protokolltester 22 seriell im Kommunikationsweg zwischen zwei Endsystemen 12a und 12b angeordnet, d.h. die gesamte Kommunikation läuft über den Protokolltester 22. Die Ausleitung der Kommunikation an den Protokolltester 22 findet bei den aus dem Stand der Technik bekannten Verfahren, siehe Fig. 4a und Fig. -4b, an einem Transitsystem 16 statt.

In Fig. 5 ist die Zusammenschaltung aus zwei Endsystemen und einem Testgerät 22 für die in Fig. 4a und 4b dargestellten, aus dem Stand der Technik bekannten Verfahren gezeigt. Das Transitsystem 16 liegt in der Zeichnungsebene hinter dem Testgerät 22 und ist daher nicht zu sehen. In diesem Stand der Technik besteht nun das Problem, daß auch am Testgerät 22 ein physikalisches Interface vorhanden sein muß, um, wie durch die Leitungen 26a bis g in Fig. 5 angedeutet, die auf dem Übertragungsmedium transportierte Information verfügbar zu machen. Für den Fall, daß lediglich Information einer niedrigen Schicht, beispielsweise Schicht 2 oder 3, für einen Bediener, der über einen Anschluß 23 auf das Testgerät 22 zugreift, von Bedeutung ist, kann die weitere Aufbereitung der Information durch darüberliegende Schichten entfallen, d.h. es genügt das Vorsehen von Leitungen 26a, 26b. Entsprechend muß in dem Testgerät 22 auch nur die Aufbereitung der Information für die niedrigen Schichten realisiert sein. Nicht vermeiden lässt sich jedoch der Bedarf eines Interfaces für die Aufbereitung der Information für Schicht 2, d.h. daß in dieses Interface die Schicht 1-Funktionen implementiert sein müssen. Insbesondere bei Hochgeschwindigkeitsverbindungen ist die Realisierung eines physikalischen Interfaces technisch sehr aufwendig und damit kostenspielig.

In diesem Zusammenhang sei auf die WO 97/35406 A verwiesen, die ein System und ein Verfahren zum Testen von Telekommunikationssystemen offenbart. Dabei werden die OSI-Schichten 3 bis 7 eines Kommunikationsprotokolls simuliert und dann dazu verwendet, ein an das Netzwerk angeschlossenes Zielsystem zu testen. Ein Protokollsimulator umfasst Protokollsimulationssoftware zum Simulieren der OSI-Schichten 3 bis 7 des Kommunikationsprotokolls, Mittel zum Packen der OSI-Schichten in einen Protokollstack, Mittel zum Erzeugen von Testnachrichten unter Verwendung des Protokollstacks, Mittel zum Simulieren der OSI-Schichten 1 und 2 und Mittel zum Senden der Testnachrichten über das Netzwerk zu dem Zielsystem. Insbesondere werden die Schichten 1 und 2, nämlich die physikalische Schicht und die Sicherungsschicht, durch ein Local Area Network (LAN) -Protokoll, wie beispielsweise Ethernet, ersetzt. Das Telekommunikationsprotokoll wird durch das Transmission Control Protocol/Internet Protocol (TCP/IP) eingekapselt und dann über ein LAN-Netzwerk unter Verwendung einer Internetsockel-Schnittstelle gesendet.

Ferner sei auf die US 5,027,343 verwiesen, die ein Zugangssystem zum Ferntesten von Produkten in einem Intergrated Services Digital Network (ISDN) -System offenbart. Das Testzugangssystem zum Testen der Schichten 2 und 3 umfasst ein Paketvermittlungsnetz und zwei Vermittlungsanpassungsschnittstellen, die über virtuelle Schaltungen des Paketvermittlungsnetzes kommunizieren. Eine ISDN-Schnittstelle verbindet die physikalischen Schichten der einen Paketvermittlungsanpassungsschnittstelle und eines Testers, während eine weitere ISDN-Schnittstelle die physikalischen Schichten der anderen Paketvermittlungsanpassungsschnittstelle und eines zu testenden Systems verbindet.

Der Erfindung liegt die Aufgabe zugrunde, eine Schaltungsanordnung bzw. ein Verfahren zur Verfügung zu stellen, die bzw. das es einem Testgerät ermöglicht, mit möglichst geringem Aufwand ein Kommunikationssystem zu testen.

Diese Aufgabe wird gelöst durch eine Schaltungsanordnung mit den Merkmalen des Anspruchs 1. Sie wird weiterhin gelöst durch ein Verfahren zum Testen eines Switches für ein Telekommunikationsnetzwerk, mit den im Anspruch 7 aufgeführten Schritten.

Unter Switches sind im Sinne der vorliegenden Erfindung Endsysteme bzw. Transitsysteme zu verstehen, bei denen die in funktionale Schichten gegliederte Kommunikationen zumindest von der ersten Schicht für eine höhere Schicht aufbereitet wird und/oder von einer höheren Schicht für die erste Schicht aufbereitet wird.

Der Erfindung liegt die Idee zugrunde, daß in einem Switch definitionsgemäß die Daten von der Bit-Übertragungsschicht, d.h. der physikalischen Schicht, hin zu höheren Schichten aufbereitet wird. Wenn nunmehr diese Information der gewünschten Schicht sowieso bereits in dem Switch zur Verfügung steht, so schlägt die Erfindung vor, diese Information unmittelbar aus dem Switch herauszuführen, in dem auf der zugehörigen Schaltungsanordnung des Switches ein Anschluß vorgesehen wird, mit dem ein Testgerät, insbesondere ein Protokolltester, verbunden werden kann. Insbesondere bei Hochgeschwindigkeitsnetzen, die mit Lichtwellenleitern verbunden sind, bedeutet der Wegfall des Übergangs von optischen Signalen auf elektrische Signale einen bedeutenden Vorteil.

Die Erfindung läßt sich anwenden nicht nur beim Monitoren, d.h. beim Überwachen einer Verbindung, sondern auch zum Einspeisen von Stimuli. Sie läßt sich daher unter anderem vorteilhaft bei der Logikanalyse sowie bei der Emulation von Funktionen einsetzen (anstelle eines bisher verwendeten separat vorzusehenden Emulators). Auf der Basis dieser Erfindung lassen sich demnach kostengünstig Testgeräte entwickeln, die die von den Switches zur Verfügung gestellte Information unmittelbar analysieren, d.h. denen die Aufbereitungs-Hardware gänzlich fehlt.

Ein weiterer Vorteil ergibt sich wie folgt: Bei den aus dem Stand der Technik bekannten sogenannten Line-Interfaces besteht das Problem, daß nur 1:1-Verbindungen realisiert werden können, d.h. am Ein- und/oder Ausgang des Interfaces kann nur die Information hinein- und/oder herausgeführt werden, die für die entsprechende Leitung bzw. in dem entsprechenden Anschluß vorgesehen ist. Im Gegensatz hierzu kann bei der Erfindung jeder andere Punkt im System getestet werden, da Information über den Anschluß einer erfindungsgemäßen Schaltungsanordnung unabhängig von der Eingangsleitung zum einen abfragbar zum anderen - und hier ist insbesondere an Testsignale gedacht - einleitbar ist. Dies rührt daher, daß durch einen Anschluß direkt an der Schaltungsanordnung eines Switches in einfacher Weise Verbindungen zu anderen Leitungen hergestellt werden können, die einem herkömmlichen Testgerät nicht zugänglich wären, da sie von keinem externen Protokoll zur Verfügung gestellt werden. Insbesondere handelt es sich dabei um die Möglichkeit der Abfrage von Information, die auf den physikalischen Leitungen, die einem Testgerät aus dem Stand der Technik zur Verfügung stehen, siehe Fig. 4a, 4b, gar nicht angeboten wird, beispielsweise Speicherinhalte, Zwischenergebnisse, etc.

Wie bereits erwähnt, können die funktionellen Schichten dem OSI-Referenzmodell entsprechen. Die Erfindung ist jedoch nicht auf das Testen von Kommunikation beschränkt, die nach dem OSI-Referenzmodell aufgebaut sind.

Kommunikation im Sinne der vorliegenden Erfindung kann insbesondere das Einleiten von Daten in den mindestens einen Anschluß oder das Ausleiten von Daten aus dem mindestens einen Anschluß umfassen. Ausleitung aus dem Anschluß schließt selbstverständlich das Weiterleiten von beispielsweise Testkommunikation innerhalb der Schaltungsanordnung, d.h. innerhalb des Switches an die dafür vorgesehenen Stellen ein.

Bevorzugt ist die Aufbereitung der Kommunikation auf einem einzigen Chip realisiert, wobei der Anschluß an dem Chip vorgesehen ist. Eine weitere bevorzugte Alternative besteht darin, daß die Aufbereitung der Kommunikation auf einem ersten Chip realisiert ist und der Anschluß auf einem zweiten Chip, wobei der erste und der zweite Chip zur Übertragung von Daten miteinander verbunden sind. Hier ist insbesondere daran zu denken, daß beispielsweise ein Nutzsignal von einem Prozessor verarbeitet werden kann, während ein Meßsignal in einem zum Prozessor zugeordneten Co-Prozessor verarbeitet werden kann.

Die obige Aufgabe wird auch gelöst durch einen Switch zum Einsatz in einem Telekommunikationsnetzwerk mit einer erfindungsgemäßen Schaltungsanordnung.

Bei dem oben erwähnten erfindungsgemäßen Verfahren kann zwischen dem Bereitstellen des Switches und dem Ausleiten von Daten auch der Schritt des Einleitens von Daten in den mindestens einen Anschluß erfolgen. Die eingeleiteten Daten können hierbei insbesondere ein Stimulationssignal umfassen. Die ausgeleiteten Daten können bei Einleitung des Stimulationssignals die Reaktion auf das Stimulationssignal umfassen. Schließlich kann auch vorgesehen sein, daß die ausgeleiteten Daten ein Monitoring-Signal umfassen.

Weitere vorteilhafte Weiterbildungen der Erfindung sind in den Unteransprüchen definiert.

Ein Ausführungsbeispiel wird im folgenden unter Hinweis auf die beigefügten Zeichnungen näher beschrieben. Es stellen dar:
- Fig. 1:: das aus dem Stand der Technik bekannte OSI-Kommunikationsmodell;
- Fig. 2:: eine Gesamtdarstellung des OSI-Referenzmodells;
- Fig. 3:: eine Prinzipdarstellung zur Erklärung der Kommunikation zwischen den Schichten des OSI-Referenzmodells;
- Fig. 4a und 4b:: zwei aus dem Stand der Technik bekannte Möglichkeiten der Anordnung eines Testgeräts zum Testen einer Kommunikation;
- Fig. 5:: eine detailliertere Darstellung der Anordnungen von Fig. 4a und Fig. 4b; und
- Fig. 6: ein Ausführungsbeispiel einer erfindungsgemäßen Schaltungsanordnung.

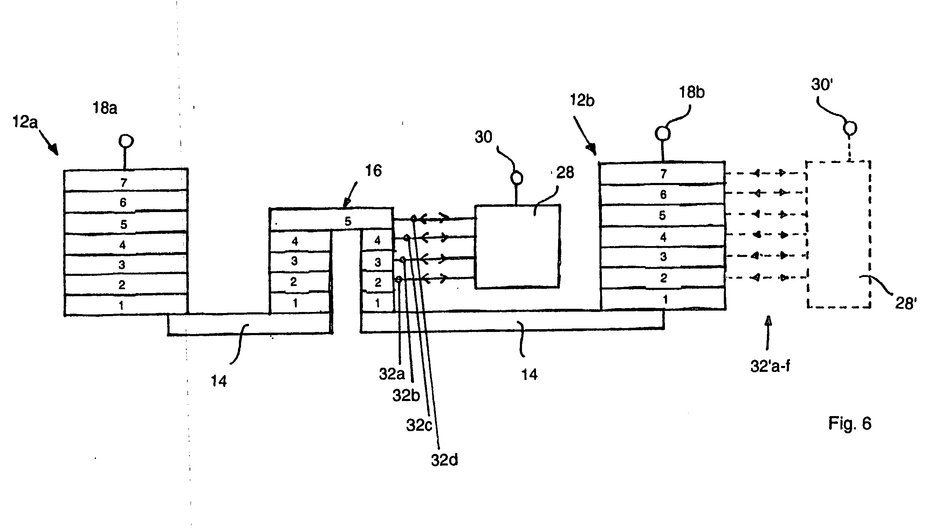

In Fig. 6 sind Elemente, die denen der vorhergehenden Figuren entsprechen, mit denselben Bezugszeichen gekennzeichnet. Fig. 6 zeigt wiederum zwei Endsysteme 12a, 12b, die jeweils von einem Benutzer 18a, 18b bedient werden können. Ein Transitsystem 16 verbindet zwei Übertragungsmedien 14. Im Sinne der obigen Definition können die Endsysteme 12a und 12b und das Zwischensystem 16 jeweils als Switch bezeichnet werden.

Zunächst zu einer ersten Ausbildung der Erfindung: An dem Transitsystem 16 ist ein Testgerät 28 angeschlossen. Das Testgerät 28 kann über einen Anschluß 30 von einem Benutzer bedient werden. Das Transitsystem 16, das ebenfalls über eine Aufbereitung der Kommunikation über funktionale Schichten verfügt, verfügt über mehrere Anschlüsse 32a bis d, die eine Kommunikation unmittelbar mit einer Schicht ermöglichen, die höher ist als die erste Schicht, im vorliegenden Beispiel die zweite dritte, vierte und fünfte Schicht, ohne daß die Kommunikation zuvor die erste Schicht im Testgerät 28 passieren müßte. Die einzelnen Anschlüsse 32a bis 32d sind mit dem Testgerät 28 verbunden. Das Testgerät 28 kann über diese Anschlüsse 32a bis 32d Daten ausleiten, beispielsweise zum Monitoren einer Kommunikation, kann jedoch auch zusätzlich Daten einleiten, beispielsweise ein Stimulationssignal, wobei dann die ausgeleiteten Daten eine Reaktion auf das Stimulationssignal umfassen können. Die Anschlüsse 32a bis 32d können selbstverständlich in einem einzigen Anschluß am Transitsystem 16 zusammengefaßt sein, wobei dann am Testgerät 28 ebenfalls nur ein Anschluß vorzusehen ist. Es braucht nicht vorgesehen werden, daß das Testgerät 28 mit allen Schichten, die höher als die erste Schicht liegen, kommunizieren kann, vielmehr genügt die Möglichkeit der Kommunikation mit den interessierenden Schichten. Insofern kann bei einem Switch, der n Schichten aufbereitet, der Zugang zu 1 bis n-1 Schichten je nach Anwendungsfall von Interesse sein.

Beispielhaft ist in Fig. 6 in gestrichelten Linien dargestellt, wie ein Testgerät 28', das am Anschluß 30' von einem Benutzer bedient werden kann, an das Endsystem 12b angeschlossen sein kann. Sowohl das Endsystem 18b als auch das Transitsystem 16 umfassen eine Schaltungsanordnung, mit der die Kommunikation aufbereitet wird. Bei dem Transitsystem 16 ist die Aufbereitung der Kommunikation auf einem einzigen Chip realisiert, wobei die Anschlüsse 32a bis 32d auf dem Chip vorgesehen sind. Das Endsystem 12b verfügt über eine Schaltungsanordnung, bei der die Aufbereitung der Kommunikation auf einem ersten Chip realisiert ist, und die Anschlüsse auf einem zweiten Chip, wobei der erste und der zweite Chip zur Übertragung von Daten miteinander verbunden sind. Der erste kann beispielsweise ein Prozessor sein, während der zweite Chip ein mit dem Prozessor zusammenarbeitender Co-Prozessor sein kann. Das Übertragungsmedium 14 können Lichtwellenleiter sein, beispielsweise für ein Hochgeschwindigkeitsnetz. Den Testgeräten 28, 28' fehlt ein Interface zur Umwandlung von optischen Signalen in elektrische Signale völlig.

Wie sich am Beispiel des Transitsystems 16 zeigt, wird die Kommunikation zwischen den Endsystemen 12a, 12b zum einen dem Testgerät 28 zur Verfügung gestellt und außerdem innerhalb des Transitsystems weitergeleitet, um die Kommunikation zwischen den beiden Endsystemen 12a, 12b aufrechtzuerhalten. Anstelle des Testgeräts 28, 28' kann auch ein Meßwertspeicher vorgesehen werden, der Daten lediglich aufzeichnet, die dann in einem weiteren Schritt an Auswerteeinheiten weitergeleitet werden können.

## Patentansprüche

1. Schaltungsanordnung, mit der eine Kommunikation, die in n funktionale Schichten (1 bis 7) gegliedert ist, von einer ersten Schicht (1) für eine höhere Schicht (2 bis 7) aufbereitbar und/oder von einer höheren Schicht (2 bis 7) für die erste Schicht (1) aufbereitbar ist, wobei die erste Schicht (1) von einer physikalischen Schicht gebildet ist,
**dadurch gekennzeichnet,**
**daß** die Schaltungsanordnung mindestens einen Anschluß (32a bis d; 32'a bis f) aufweist, der mindestens einer beliebig ausgewählten Schicht der Schichten 2 bis n zugeordnet ist, so dass über diesen mindestens einen Anschluß (32a bis d; 32'a bis f) eine Kommunikation unmittelbar mit der mindestens einen der Schichten 2 bis n möglich ist.

2. Schaltungsanordnung nach Anspruch 1,
**dadurch gekennzeichnet,**
**daß** die funktionalen Schichten (1 bis 7) dem OSI-Referenzmodell entsprechen.

3. Schaltungsanordnung nach einem der Anspruch 1 oder 2,
**dadurch gekennzeichnet,**
**daß** die Kommunikation das Einleiten von Daten in den mindestens einen Anschluß (32a bis d; 32'a bis f) und/oder das Ausleiten von Daten aus dem mindestens einen Anschluß (32a bis d; 32'a bis f) umfaßt.

4. Schaltungsanordnung nach einem der vorhergehenden Ansprüche,
**dadurch gekennzeichnet,**
**daß** die Aufbereitung der Kommunikation auf einem einzigen Chip realisiert ist, wobei der Anschluß (32 a bis d) an dem Chip vorgesehen ist.

5. Schaltungsanordnung nach einem der Ansprüche 1 bis 3,
**dadurch gekennzeichnet,**
**daß** die Aufbereitung der Kommunikation auf einem ersten Chip realisiert ist und der Anschluß (32'a bis f) auf einem zweiten Chip, wobei der erste und der zweite Chip zur Übertragung von Daten miteinander verbunden sind.

6. Switch zum Einsatz in einem Telekommunikationsnetzwerk mit einer Schaltungsanordnung nach einem der vorhergehenden Ansprüche.

7. Verfahren zum Testen eines Switches (12a; 12b; 16) für ein Telekommunikationsnetzwerk folgende Schritte umfassend:
a) Bereitstellen eines Switches (12a; 12b; 16) mit einer Schaltungsanordnung, mit der eine Kommunikation, die in n funktionale Schichten (1 bis 7) gegliedert ist, von einer ersten Schicht (1) für eine höhere Schicht (2 bis 7) aufbereitbar und/oder von einer höheren Schicht (2 bis 7) für die erste Schicht (1) aufbereitbar ist, wobei die erste Schicht (1) von einer physikalischen Schicht gebildet ist und die Schaltungsanordnung mindestens einen Anschluß (32a bis d, 32'a bis f) aufweist, der mindestens einer beliebig ausgewählten Schicht der Schichten 2 bis n zugeordnet ist, so dass über diesen mindestens einen Anschluss (32a bis d; 32'a bis f) eine Kommunikation unmittelbar mit der mindestens einen der Schichten 2 bis n möglich ist;
b) Ausleiten von Daten aus dem mindestens einen Anschluß (32a bis d, 32'a bis f);
c) Auswerten der ausgeleiteten Daten.

8. Verfahren nach Anspruch 7,
**dadurch gekennzeichnet,**
**daß** zwischen Schritt a) und Schritt b) folgender Schritt erfolgt:
Einleiten von Daten in den mindestens einen Anschluß (32a bis d, 32'a bis f).

9. Verfahren nach Anspruch 7 oder 8,
**dadurch gekennzeichnet,**
**daß** das die eingeleiteten Daten ein Stimulationssignal umfassen.

10. Verfahren nach Anspruch 9,
**dadurch gekennzeichnet,**
**daß** die ausgeleiteten Daten eine Reaktion auf das Stimulationssignal umfassen.

11. Verfahren nach einem der Ansprüche 7 bis 10,
**dadurch gekennzeichnet,**
**daß** die ausgeleiteten Daten ein Monitoringsignal umfassen.

## Claims

1. Circuit arrangement with which a communication, which is subdivided into n functional layers (1 to 7), is processable by a first layer (1) for a higher layer (2 to 7) and/or by a higher layer (2 to 7) for the first layer (1), the first layer (1) being formed by a physical layer,
**characterised in that**
the circuit arrangement features at least one terminal (32a to d; 32'a to f) which is assigned to at least one randomly selected layer of the layers 2 to n, so that via this at least one terminal (32a to d; 32'a to f) a communication immediately with the at least one of the layers 2 to n is possible.

2. Circuit arrangement according to claim 1,
**characterized in that**
the functional layers (1 to 7) correspond to the OSI reference model.

3. Circuit arrangement according to one of claims 1 or 2,
**characterized in that**
the communication comprises the inputting of data into the at least one terminal (32a to d; 32'a to f) and/or the release of data from the at least one terminal (32a to d; 32'a to f).

4. Circuit arrangement according to one of the preceding claims,
**characterized in that**
the formatting of the communication is realized on a single chip, with the terminal (32 a to d) being provided at the chip.

5. Circuit arrangement according to one of claims 1 to 3,
**characterized in that**
the formatting of the communication is realized on a first chip and the terminal (32'a to f) on a second chip, with the first and second chip being interlinked for the transmission of data.

6. Switch for use in a telecommunications network with a circuit arrangement according to one of the preceding claims.

7. Method for testing a switch (12a; 12b; 16) for a telecommunication network, comprising the following steps:
a) Provisioning of a switch (12a; 12b; 16) with a circuit arrangement with which a communication, which is subdivided into n functional layers (1 to 7), is processable by a first layer (1) for a higher layer (2 to 7) and/or by a higher layer (2 to 7) for the first layer (1), the first layer (1) being formed by a physical layer and the circuit arrangement featuring at least one terminal (32a to d; 32'a to f) which is assigned to at least one randomly selected layer of the layers 2 to n, so that via this at least one terminal (32a to d; 32'a to f) a communication with the at least one of the layers 2 to n is possible;
b) Outputting of data from the at least one terminal (32a to d; 32'a to f);
c) Analysing the output data.

8. Method according to claim 7,
**characterized in that**
between step a) and step b) the following step is effected:
Inputting of data into the at least one terminal (32a to d, 32'a to f).

9. Method according to claim 7 or 8,
**characterized in that**
the input data comprise a stimulation signal.

10. Method according to claim 9,
**characterized in that**
the output data comprise a response to the stimulation signal.

11. Method according to one of claims 7 to 10,
**characterized in that**
the output data comprise a monitoring signal.

## Revendications

1. Circuit, avec lequel une communication articulée en n couches fonctionnelles (1 à 7) peut être préparée d'une première couche (1) pour une couche supérieure (2 à 7) et/ou d'une couche supérieure (2 à 7) pour la première couche (1), la première couche (1) étant constituée d'une couche physique,
**caractérisé en ce que**
le circuit présente au moins un raccordement (32a à d ; 32'a à f) affecté à au moins l'une des couches 2 à n choisie de façon quelconque, de manière telle que par cet au moins un raccordement (32a à d ; 32'a à f) une communication directement avec ladite au moins une couche 2 à n soit possible.

2. Circuit selon la revendication 1,
**caractérisé en ce que**
les couches fonctionnelles (1 à 7) correspondent au modèle de référence ISO.

3. Circuit selon l'une quelconque des revendications 1 ou 2,
**caractérisé en ce que**
la communication comprend la fourniture de données à au moins un raccordement (32a à d ; 32'a à f) et/ou le prélèvement de données au dit au moins un raccordement (32a à d ; 32'a à f).

4. Circuit selon l'une quelconque des revendications précédentes,
**caractérisé en ce que**
la préparation de la communication se réalise par une unique puce, le raccordement (32a à d) étant prévu à cette puce.

5. Circuit selon l'une quelconque des revendications 1 à 3,
**caractérisé en ce que**
la préparation de la communication se réalise par une première puce et le raccordement (32'a à f) par une deuxième puce, la première et la deuxième puce étant reliées ensemble pour la transmission de données.

6. Commutateur à utiliser dans un réseau de télécommunication avec un circuit selon l'une quelconque des revendications précédentes.

7. Procédé de test d'un commutateur (12a ; 12b ; 16) pour un réseau de télécommunication, qui comprend les étapes suivantes :
a) préparation d'un commutateur (12a ; 12b ; 16) avec un circuit, avec lequel une communication articulée en n couches fonctionnelles (1 à 7) peut être préparée d'une première couche (1) pour une couche supérieure (2 à 7) et/ou d'une couche supérieure (2 à 7) pour la première couche (1), la première couche (1) étant constituée d'une couche physique et où le circuit présente au moins un raccordement (32a à d ; 32'a à f) affecté à au moins l'une des couches 2 à n choisie de façon quelconque, de manière telle que par cet au moins un raccordement (32a à d ; 32'a à f) une communication directement avec au moins l'une des couches 2 à n soit possible ;
b) prélèvement de données au dit au moins un raccordement (32a à d ; 32'a à f) ;
c) exploitation des données prélevées.

8. Procédé selon la revendication 7,
**caractérisé en ce que**,
entre l'étape a) et l'étape b) se déroule l'étape suivante :
fourniture de données au dit au moins un raccordement (32a à d ; 32'a à f).

9. Procédé selon la revendication 7 ou 8,
**caractérisé en ce que**
les données fournies comprennent un signal de stimulation.

10. Procédé selon la revendication 9,
**caractérisé en ce que**
les données prélevées comprennent une réaction au signal de stimulation.

11. Procédé l'une quelconque des revendications 7 à 10,
**caractérisé en ce que**
les données prélevées comprennent un signal de surveillance.
